# EUROPEAN PATENT APPLICATION

(11) **EP 0 849 658 A2**
(43) Date of publication of application: **24.06.1998**
(21) Application number: 97309869.2
(22) Date of filing: 08.12.1997
(51) Int. Cl.: G06F 1/00

(54) **Secure data processing method and system**

(30) Priority: 18.12.1996 GB 9626200
(71) Applicant: NCR INTERNATIONAL INC., Dayton, Ohio 45479 (US)
(72) Inventor: Saunders, Keith A., Dundee, Scotland DD2 5RR (GB)
(74) Representative: Irish, Vivien Elizabeth

(57) **Abstract**

The present invention relates to a secure data processing method and system which includes a central processing unit, an operating system (10) and a file system.

The file system includes data which consists of protected file entries included within directories of file entries. Each directory is made secure by having an associated digital directory signature stored with the directory. At least some of the file entries are also protected by an associated digital signature. The data processing system has means to perform a checking algorithm which calculates authentic signatures. Access to the data stored in the file system is only allowed if the authentic signature calculated by the system matches the signature of the directory being accessed. Access to a file entry in the directory is allowed if the calculated signature for the file entry matches the signature stored with the file entry.

Each file entry signature is stored as an encrypted signature in association with a pointer to a key which is used to decrypt the signature.

## Description

The present invention relates to a secure data processing method and system and is of particular application to a financial terminal.

A data processing system commonly has a central processing unit, an operating system and a file system, usually including a hard disk, for files to be accessed by the central processor unit under the control of the operating system. All such computer systems rely on the software that, ultimately, controls the functions offered to the user.

Software can be tampered with to allow an attacker to compromise the data processing system. Protection cannot be achieved by simply restricting the files that can be executed, or by encrypting the files on the hard disk. This is because the compromise may occur unknown to a legitimate user, or could be a deliberate fraud.

It would be desirable to restrict access for updating files and to detect invalid changes in real time to prevent system compromise before damage can occur.

It is therefore an object of the present invention to provide a method and a system for restricting access to files in a data processing system which can operate in real time.

According to the present invention there is provided a method of accessing data in a file system of a data processing system which also includes a programmable central processor unit, and an operating system, the data of the file system having a digital signature identifying the data, the method comprising the steps of performing a checking algorithm to calculate an authentic digital signature for the data, reading the identifying digital signature from the file system, comparing the authentic digital signature of the data with the digital signature read from the file system and accessing the file data in response to a match between the authentic digital signature and the digital signature read from the file system.

Further according to the present invention there is provided a data processing system comprising a programmable central processing unit, an operating system, and a file system for data which has a digital signature to identify the data, the file system being provided with a file system driver including means to perform a checking algorithm to generate an authentic digital signature, means to read the identifying digital signature from the file system and means to allow access to the data only in response to a match between the authentic signature of the data and the identifying signature.

The invention will now be described, by way of example, with reference to the accompanying drawings in which:
Figure 1 is a diagrammatic representation of a file system included in a data processing system according to the present invention and
Figures 2 and 3 are operating flow diagrams relating to the operation of the file system of Figure 1.

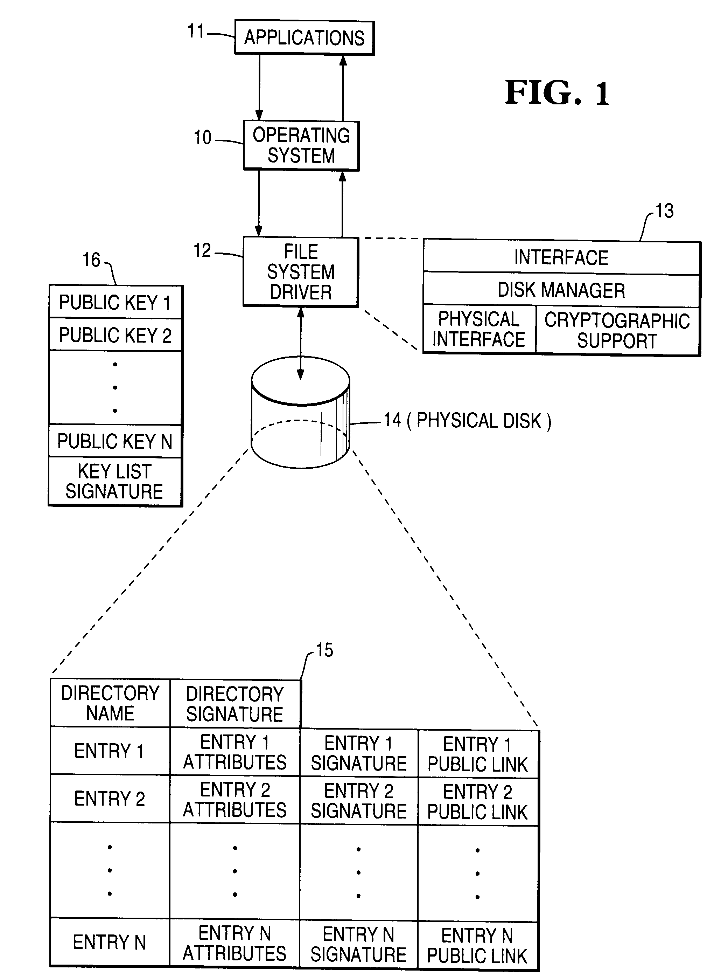

Referring first to Figure 1, there is shown diagrammatically a file system incorporated into a data processing system which includes a central processor unit, not shown, and an operating system 10 which runs applications 11. The file system has a file system driver 12 which is a part of the operating system 10. The driver 12 is responsible for managing all the read and write operations to a disk drive 14 which includes a physical storage disk 15 on which the files are physically recorded. The file system driver includes a number of functions which are represented diagrammatically by the block 13. The functions included within the file system driver include an interface to the disk drive 14, a disk manager, a physical interface and cryptographic support.

The file system is incorporated into a secure terminal in which it is not possible to make unauthorised modifications to the operating system to remove the file system driver 12. The files in the file system are structured in a fashion similar to other file systems in that they have a root directory which is the top of a tree structure which contains other directories. Each directory, including the root directory can contain files.

Each directory has a directory name and a directory signature. One of the directories on the physical disk 15 is shown schematically in Figure 1 as a convenient reference to the contents of the directory. The schematic diagram in Figure 1 does not represent the physical character of the directory as will be well understood by those skilled in the art. Each directory may have a number of file entries from entry 1 to entry N. Each file entry has stored attributes including an attribute which is additional to those which are found on conventional file systems. The additional attribute is used to specify whether the file entry is protected or not.

If a file entry is not protected, then no further information respecting that file entry is stored on the disk 15. If, however, the file entry is protected, then a digital signature identifying the file entry is stored together with a pointer which links to a public key in a public key directory 16 stored on the disk 15. The public key directory 16 has a flat structure because the same public key may be used for file entries in more than one directory. The public keys are used to authenticate the file entries as will be explained.

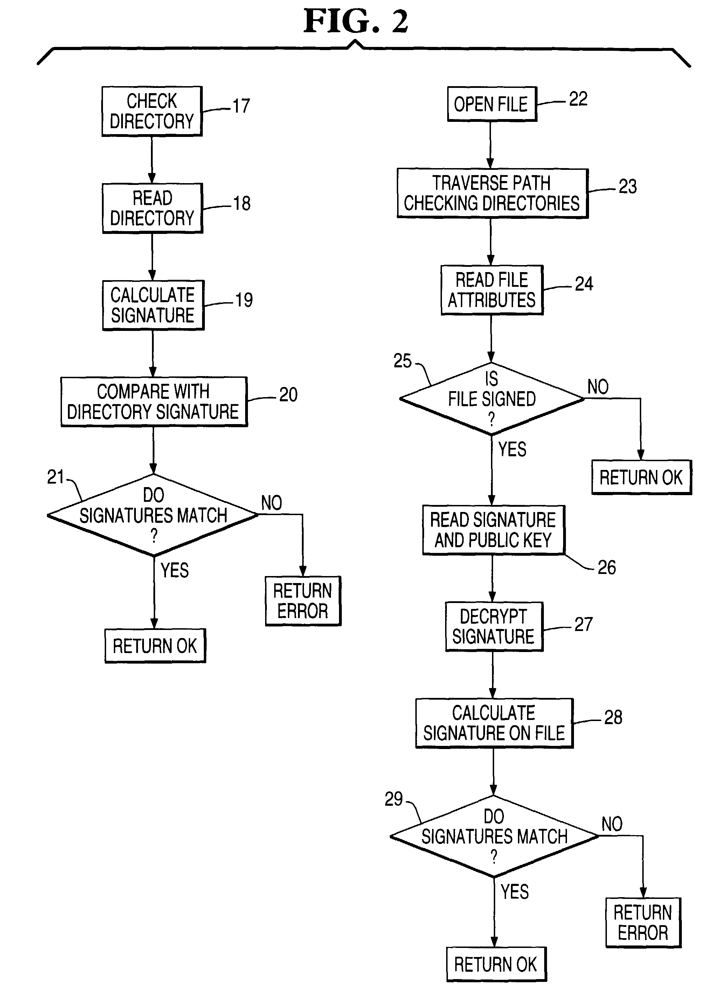

Referring now to Figure 2, an instruction 17 to check a directory results in step 18 being performed to read the directory name and the directory signature. All the directories are protected using a symmetric key checking algorithm such as MAC in the case of the DES algorithm. This prevents an unauthorised agency from changing the directory contents either by using a software driver or by removing the disk 15 to another location and altering it. The symmetric key must not be stored on the disk 15 but is kept in a secure location not accessible to the applications running on the system or to outside agencies. This key is randomly generated by the file system driver when it is installed.

After having performed the step 18, the correct authentic signature of the directory to be addressed is calculated by the file system in step 19 using the checking algorithm. The calculated authentic signature is compared with the recorded directory signature in step 20 and if the signatures match in step 21, the result is to return an indication that the directory is an authentic directory. If not, an error is returned.

In order to access a file an instruction at step 22 results in traversing the path through which the directory including the file is authenticated in step 23. The file attributes of the file entry are read in step 24 and a determination is made in step 25 whether the file is signed or not. If the file is not signed, an indication is returned to allow access to the file entry. If, however, the file is signed, the signature and the public key in the directory 16 are both read in step 26. The signature of the file entry is decrypted in step 27 and the authentic digital signature for the file entry is calculated in step 28 by means of the cryptographic support included within the functions of the file system driver 12 using an asymmetric key algorithm. A comparison is performed in step 29 to determine whether the authentic signature matches the decrypted signature. If so an indication is returned to allow access to the file entry. If not an error indication is returned.

It will be seen that when a protected file is opened by an application, it will be checked for integrity using the digital signature recorded with the file and the associated public key assigned to that file. These protected files cannot be written to in the normal fashion or they will fail their integrity check. The file system will prohibit writing to the file.

A protected file can be exchanged for an equivalent protected file by supplying a new signed file, using the same public key, or by supplying an exchange message signed with the secret key partner of the existing public key and containing the new public key for the file.

Protected files can be deleted by supplying the secure file system with a deletion message which has been signed by the secret key partner of the public key supplied with the file to be deleted.

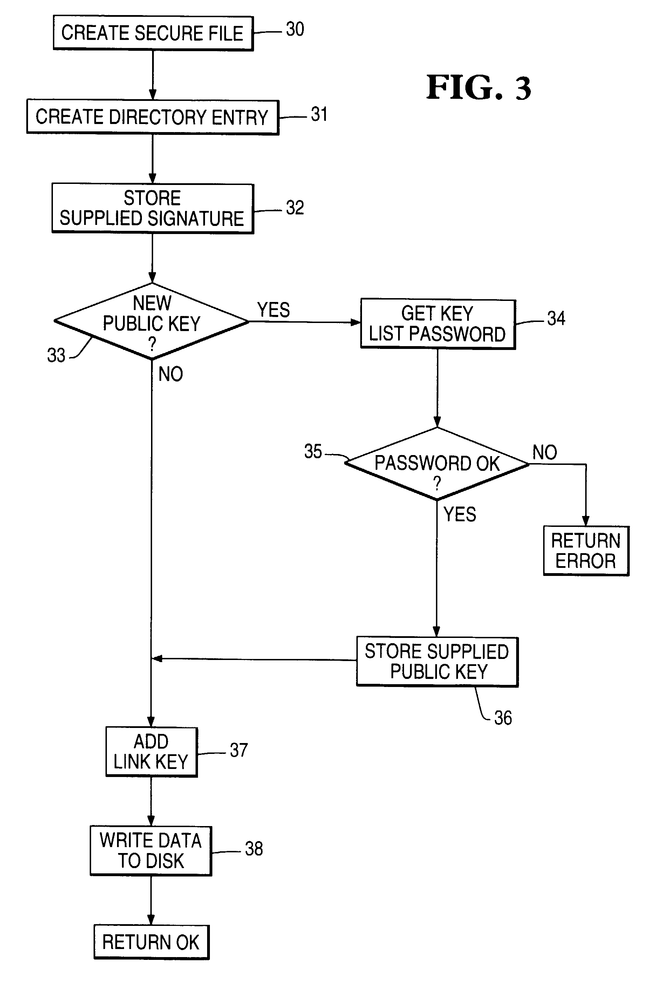

The file system is protected by a password mechanism, as will be described with reference to Figure 3, and the file system cannot be reformatted unless the password is supplied. The password is stored on the disk volume in an encrypted fashion using the symmetric key specified earlier.

In Figure 3, a create secure file instruction 30 is followed by the step of creating a directory entry in step 31. The supplied signature for the file is stored in step 32 and a determination is made in step 33 whether there is a new public key to be stored. If yes, a password for the public key list is got in step 34 and the password is checked in step 35. If not correct, an error return is made. If the password is correct, the public key which has been supplied is stored in the public key list. and a key link for the file entry is stored in step 37.

If a new public key was not to be stored, the step 33 leads directly to the step 37. From the step 37, the data is written to the disk in step 38 and a successful indication is then returned.

Updates to the public key directory can either be accomplished automatically, when a new file is being added, or manually. In either case a password has to be entered to allow access to the directory. The password is not required when a file is being exchanged. The file system can be configured to allow only manual updates to the public key directory. In this case, when a new file is added, the system scans the directory for a public key matching that supplied with the file and adds the pointer reference.

It will be apparent that a secure file system has been described which can protect directories and files from unauthorised changes. Some of the files may have no security requirements and be merely data files with no security implications. The protected files may be executed as programs or be loaded as dynamic link libraries.

## Claims

1. A method of accessing data in a file system of a data processing system which includes a programmable central processor unit, and an operating system, the data of the file system having a digital signature identifying the data, characterised by the steps of performing a checking algorithm to calculate (19) an authentic signature for the data, reading the identifying signature from the file system, comparing (20) the authentic digital signature of the data with the digital signature read from the file system, and accessing the file data in response to a match between the authentic digital signature and the digital signature read from the file system.

2. A method as claimed in claim 1, wherein the data comprises a directory of file entries having a digital signature identifying the directory.

3. A method as claimed in claim 1, wherein the data comprises one or more file entries within a directory of file entries, one or more of the file entries having an associated identifying digital signature.

4. A method as claimed in claim 3, wherein the directory has a digital signature identifying the directory.

5. A method as claimed in claim 3 or 4, wherein the file entries are each associated with an attribute indicating that the file entry is protected by an encrypted digital signature and are each associated with a key, the method comprising reading (20) the signature for a file entry and decrypting (27) the signature by means of the associated key.

6. A data processing system comprising a programmable central processing unit, an operating system (10), and a file system for data which has a digital signature to identify the data, the file system being provided with a file system driver (12) including means to perform a checking algorithm to generate an authentic digital signature, means to read the identifying digital signature from the file system and means to allow access to the data only in response to a match between the authentic signature of the data and the identifying signature.

7. A system as claimed in claim 6, wherein the file system is adapted to store the data in the form of a directory of file entries which has a digital signature identifying the directory.

8. A system as claimed in claim 6, wherein the file system is adapted to store the data in the form of file entries in a directory of file entries, one or more of the file entries having an associated digital signature.

9. A system as claimed in claim 8, wherein the file system is adapted to store a digital signature identifying the directory of file entries.

10. A system as claimed in claim 8 or 9, wherein the file system is adapted to store each of the file entries in association with an attribute to indicate whether the file entry is protected by an encrypted digital signature and in association with a key, the file system having means to decrypt each encrypted key using the associated key.
